# EUROPEAN PATENT SPECIFICATION

(11) **EP 4 237 602 B1**
(45) Date of publication and mention of the grant of the patent: **17.06.2026**
(21) Application number: 21811675.4
(22) Date of filing: 29.10.2021
(51) Int. Cl.: D01F 6/70, D01D 5/06, D01F 8/16, D01F 8/18, D01D 13/02, D01F 11/04

(54) **POLY(GLYCEROL SEBACATE) URETHANE FIBERS, FABRICS FORMED THEREFROM, AND METHODS OF FIBER MANUFACTURE**
POLY(GLYCEROL SEBACATE)-URETHAN-FASERN, DARAUS GEBILDETE STOFFE UND VERFAHREN ZUR FASERHERSTELLUNG.
FIBRES DE POLY (SÉBACATE DE GLYCÉROL) URÉTHANE, TISSUS FORMÉS À PARTIR DE CELLES-CI ET PROCÉDÉS DE FABRICATION DE FIBRES.

(30) Priority: 02.11.2020 US 202063108491 P
(43) Date of publication of application: 06.09.2023
(73) Proprietor: The Secant Group, LLC, Telford, PA 18969 (US)
(72) Inventor: TASCAN, Mevlut, Breinigsville, Pennsylvania 18031 (US); TEKE, Sengul, Doylestown, Pennsylvania 18901 (US); CRUMBLING, Todd, Perkasie, Pennsylvania 18944 (US); SMOOT, Carissa, Lansdale, Pennsylvania 19446 (US); REED, Stephanie, Conshohocken, Pennsylvania 19428 (US); GINN, Brian, Harleysville, Pennsylvania 19438 (US)
(74) Representative: Prinz & Partner mbB
(86) International application number: PCT/US2021/057329
(87) International publication number: WO 2022/094261

(56) References cited:
- US-A1- 2020 061 240
- US-A1- 2020 179 096

## Description

### TECHNICAL FIELD

The present disclosure is generally directed to fibers. More specifically, the present disclosure is directed to fibers containing poly(glycerol sebacate) urethane (PGSU), fabrics formed from such fibers, and systems and methods of fiber manufacture.

### BACKGROUND

Fiber production of certain polymer blends for specific applications by a sheath-core fiber spinning process is known, but all of these processes are based on a solution-based solidification. More specifically, wet spinning core sheath production using two different polymers is known.

For example, core fiber of poly(lactic-co-glycolic acid) (PLGA) has been coated with a sodium alginate layer (see, for example, Wanawananon et al., "Fabrication of novel core-shell PLGA and alginate fiber for dual drug delivery system", Polymers Advanced Technologies, Vol. 27, pp. 1014-1019 (2016), in which fibers were made with a wet spinning technique with coaxial spinneret, and this core-shell structure fiber was used to deliver the two kinds of drugs at different stages).

Conventionally, PGSU is produced by reacting poly(glycerol sebacate) (PGS) resin polyol with an isocyanate to form a urethane bond. PGS is a polyester copolymer of glycerol monomer and sebacic acid monomer. When the isocyanate is a diisocyanate, the PGS is crosslinked by the diisocyanate. Upon completion of this process, solid PGSU with rubbery characteristics is produced.

Fibrous and scaffold-type biomedical constructs based on poly(glycerol sebacate) (PGS) have also been described for biomedical applications. For example, U.S. Patent Application Publication No. 2020/0179096 discloses biodegradable vascular grafts comprising PGS-based cores combined with polymeric sheath structures to provide mechanical support and handling characteristics. These constructs, however, rely on electrospinning and post-processing techniques and do not describe the formation of poly(glycerol sebacate) urethane (PGSU) fibers.

Although PGS fiber production is described in US 2019/0127887 A1, PGSU fiber production is not known in the art.

There is a need for a fiber structure of biodegradable polymer that offers the many advantages for long-acting implantables over other polymers, particularly for high-loading, long-duration implants that are gaining interest in the pharmaceutical industry. Fibrous morphologies allow easy implantation/removal, anchor-ability in tissue, and mechanism stability.

### SUMMARY

The object of the invention is solved by a manufacturing process according to claim 1, an article according to claim 10 and a continuous poly(glycerol sebacate) urethane (PGSU) fiber forming system according to claim 14.

In an exemplary embodiment, a manufacturing process includes combining a liquid resin with a liquid reactive cross-linking composition to form a reactive core composition. The liquid resin is a liquid poly(glycerol sebacate) (PGS) composition comprising PGS resin, and the liquid reactive crosslinking composition is a liquid isocyanate composition comprising at least one isocyanate. The manufacturing also includes contacting the reactive core composition with a sheath composition including a carrier polymer in a solvent. The manufacturing process further includes wet spinning the reactive core composition with the sheath composition to form a sheath-core fiber including a core including at least one continuous fiber of a reaction product of the liquid resin and liquid cross-linking composition and a sheath surrounding the core. The cross-linking composition reacts with the resin during the wet spinning. The sheath includes the carrier polymer. The at least one continuous fiber is at least one continuous poly(glycerol sebacate) urethane (PGSU) fiber, and the isocyanate reacts with the PGS resin to form PGSU during the wet spinning.

In another exemplary embodiment, a manufacturing process includes combining a liquid poly(glycerol sebacate) (PGS) composition including PGS resin with a liquid isocyanate composition including at least one isocyanate to form a core composition. The manufacturing process also includes feeding the core composition and an alginate solution through a spinneret. The alginate solution includes an alginate in water at 1% to 7% by weight of the alginate solution. The manufacturing process further includes wet spinning the core composition with the alginate solution to form a sheath-core fiber including a core including at least one continuous poly(glycerol sebacate) urethane (PGSU) fiber and a sheath surrounding the core. The sheath includes the alginate. The wet spinning includes drafting the sheath-core fiber in at least one coagulation bath and drawing the sheath-core fiber from the at least one coagulation bath. The at least one coagulation bath includes a first coagulation bath containing a first coagulation solution comprising about 2% to about 20% by weight calcium chloride in water. The isocyanate reacts with the PGS resin to form PGSU during the wet spinning.

In another exemplary embodiment, a composition includes at least one continuous PGSU fiber including PGSU.

In yet another exemplary embodiment, a continuous PGSU fiber forming system includes a first feeding tank, a second feeding tank, a third feeding tank, a first pump, a second pump, a third pump, a mixer, a spinneret, and a first coagulation bath. The first feeding tank holds a liquid PGS composition including PGS resin. The second feeding tank holds a liquid isocyanate composition including at least one isocyanate. The third feeding tank holds a sheath solution including a carrier polymer. The first pump receives the liquid PGS composition from the first feeding tank and pumps the liquid PGS composition to the mixer. The second pump receives the liquid isocyanate composition from the second feeding tank and pumps the liquid isocyanate composition to the mixer. The third pump receives the sheath solution from the third feeding tank and pumps the sheath solution to the spinneret. The mixer mixes the liquid PGS composition with the liquid isocyanate composition to form a core composition and feeds the core composition to the spinneret. The spinneret receives and transfers the core composition and the sheath solution to form a sheath-core fiber including a sheath including the sheath solution and a core including a continuous PGSU fiber from the core composition by wet-spinning. The isocyanate and the PGS resin in the core composition react during the wet-spinning to form the continuous PGSU fiber. The first coagulation bath holds a first solidification solution and receives the sheath-core fiber from the spinneret.

This summary is intended to introduce a selection of concepts in a simplified form that is further described by this disclosure. Various features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 schematically shows a continuous PGSU/carrier bicomponent fiber forming system in an embodiment of the present disclosure.
FIG. 2 schematically shows the formation of a sheath-core structure in an embodiment of the present disclosure.
FIG. 3 schematically shows a continuous PGSU fiber formation system in an embodiment of the present disclosure.
FIG. 4 schematically shows a core-inner sheath-outer sheath composition in an embodiment of the present disclosure.
FIG. 5 shows a scanning electron microscopy (SEM) image of PGSU fibers formed in a first example.
FIG. 6 shows an SEM image of PGSU fibers formed in a second example.
FIG. 7 shows an SEM image of PGSU fibers formed in a third example.
FIG. 8 shows an SEM image of PGSU fibers formed in a fourth example.
FIG. 9 shows an image of a suture formed from PGSU-alginate core-sheath monofilament fiber in a fifth example.

Where possible, the same reference numbers are attempted to be used throughout the drawings to represent the same parts.

### DETAILED DESCRIPTION OF EXEMPLARY EMBODIMENTS

Provided are manufacturing processes, continuous PGSU fibers, and yarns, fabrics, and textiles of such continuous fibers.

Embodiments of the present disclosure, for example, in comparison to concepts failing to include one or more of the features disclosed herein, provide a continuous PGSU fiber, provide yarns, fabrics, or textiles including a continuous PGSU fiber, provide sustained controlled release of a drug from a continuous fiber, provide a porous continuous PGSU fiber, provide a crosslinking chemical reaction in the core of a sheath-core structure, provide a continuous polymer fiber by chemical reaction during wet spinning in a sheath-core arrangement, or combinations thereof.

PGSU is a bioerodible elastomer and a challenging polymer to manufacture as a result of its two-part reactive chemistry. PGSU is produced by combining a free hydroxy group of the glycerol polyol of PGSU with an isocyanate crosslinker, which may occur in the absence or in the presence of a catalyst.

A PGS resin and an isocyanate, the reactant mixture to form PGSU, does not hold its structure and is very sticky under room temperature conditions. The PGSU mixture by itself is not initially strong enough to be formed into a fiber under room temperature conditions. After PGSU has been synthesized, the properties of PGSU do not permit it to be dissolved and reshaped using wet spinning. This makes the production of a 100% PGSU fiber very difficult.

According to the invention, a manufacturing process forms a continuous PGSU fiber from poly(glycerol sebacate) (PGS) resin and an isocyanate.

According to the invention, the manufacturing process includes the wet fiber production process of wet spinning. In exemplary embodiments, the wet-spinning technique is conducted under room temperature processing conditions.

Reactive two-part chemistries, such as forming PGSU and similar to that observed in silicone manufacturing, are not conventionally used to produce wet-spun fibers due to the long reaction and transition times between resinous material morphology and fully solidified thermoset. This type of chemistry is typically paired with reactive injection molding to form shapes. Surprisingly, the sheath-core structure formed by processes disclosed herein protects the flowable PGSU from the water of the sheath composition during its crosslinking reaction to a solid, elastomeric thermoset fiber in a wet fiber process.

Surprisingly, a continuous PGSU fiber is produced while PGS and isocyanate material are chemically reacting with each other. Although the process is described herein with respect to PGSU fiber formation, other fiber production may also be possible by a wet fiber process while chemical reaction is occurring in the core of a sheath-core system. Although the described embodiments primarily include the formation of PGSU fibers, other appropriate fibers may similarly be formed. Other appropriate fiber materials may include, but are not limited to, alginate, chitosan, collagen, fibrin, polyurethane, silicone, N-isopropylacrylamide (NIPAm), poly(N-isopropylacrylamide), thermoresponsive polymers, photopolymers, and crosslinking polymers.

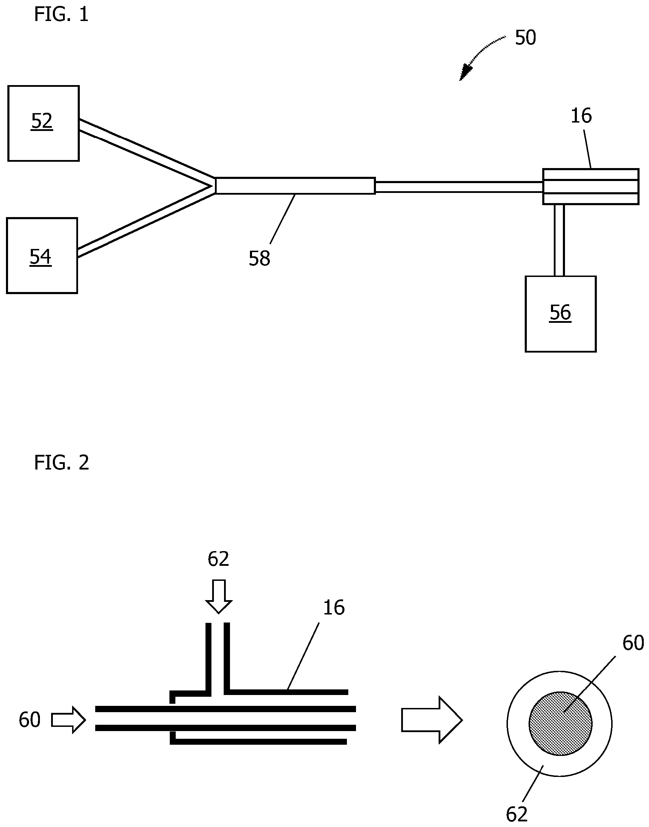

In exemplary embodiments, a continuous PGSU/carrier bicomponent fiber forming system 50 includes three feeding tanks, as shown schematically in FIG. 1. A first feeding tank 52 holds a liquid PGS composition including PGS resin. A second feeding tank 54 holds a liquid isocyanate composition including an isocyanate. A third feeding tank 56 holds a sheath solution including a carrier polymer, such as, for example, alginate. In exemplary embodiments, the wet spinning process includes dissolving polymer pellets in a solvent. The viscosity of the polymer is controlled during the process by adjusting the polymer/solvent ratio. Since PGSU formation has a short reaction time, the PGS and isocyanate contact and are mixed together after the pumps by a mixer 58 and right before entering a spinneret, such as, for example, the coaxial spinneret 16 shown schematically in FIG. 1. In some embodiments, the mixer 58 is a static mixer. In some embodiments, the mixer 58 is a dynamic mixer. The continuous PGS/carrier bicomponent fiber forming system therefore also includes three pumps (not shown), one pump for the carrier solution, one for the liquid PGS composition, and one for the liquid isocyanate.

In some embodiments, the PGS resin is dissolved in an organic solvent to form the liquid PGS composition. Appropriate organic solvents for the PGS may include, but are not limited to, acetone, propyl acetate, or combinations thereof. In some embodiments, the organic solvent is a mixture of acetone and propyl acetate in a weight:weight ratio of 3:1 to 1:3, alternatively 2:1 to1:2, alternatively 3:2 to 2:3, alternatively about 1:1, or any value, range, or sub-range therebetween. Appropriate concentrations for the PGS resin in the PGS composition may include, but are not limited to, by weight, in the range of 30% to 60%, alternatively 35% to 55%, alternatively 40% to 50%, or any value, range, or sub-range therebetween, using one or more solvents to adjust the viscosity of the PGS polymer.

In other embodiments, the liquid PGS composition is neat PGS resin without any organic solvent. In such embodiments, the temperature of the liquid PGS composition may be modulated to modify the viscosity of the liquid PGS composition. Alternatively or additionally, additives, such as, for example, lubricants, emulsifiers, thickeners, and/or release agents, may be incorporated into the liquid PGS composition to adjust the viscosity of the liquid PGS composition. Other viscosity-reducing agents, such as, for example, amino acids, polyethylene glycol (PEG) varieties, or other excipients, may be included as additives. Other additives may include processing aids, such as, for example, magnesium stearate or other excipients.

The isocyanate is also in a liquid state in a liquid isocyanate composition prior to being combined with the liquid PGS composition. In some embodiments, the liquid isocyanate composition is neat isocyanate. In other embodiments, the liquid isocyanate composition includes one or more organic solvents. The organic solvent may be the same solvent as in the liquid PGS composition or it may be another solvent that improves the miscibility between the liquid isocyanate composition and the liquid PGS composition.

In some embodiments, a relative amount of isocyanate is selected with respect to PGS to provide an isocyanate-to-hydroxyl stoichiometric ratio in the range of 1:10 to 4:1, alternatively in the range of 1:10 to 1:4, alternatively in the range of 1:4 to 1:3, alternatively in the range of 1:4 to 4:3, alternatively in the range of 4:3 to 5:2, alternatively in the range of 1:1 to 4:1, alternatively in the range of 4:5 to 4:1, alternatively in the range of 2:3 to 4:1, or any value, range, or sub-range therebetween. In exemplary embodiments, the isocyanate is a diisocyanate crosslinker. Appropriate isocyanates may include, but are not limited to, hexamethylene diisocyanate (HDI), methylene diphenyl diisocyanate (MDI), toluene diisocyanate (TDI), isophorone diisocyanate (IPDI), methylenebis(cyclohexyl isocyanate) (HMDI), tetramethylxylene diisocyanate (TMXDI), aliphatic isocyanates, aromatic isocyanates, aliphatic-aromatic combination isocyanates, and/or blocked isocyanates. In some embodiments, the isocyanate is HDI, and an amount of isocyanate is selected to provide a PGS:HDI mass ratio in the range of 3:1 to 4:1, alternatively about 7:2, or any value, range, or sub-range therebetween.

In some embodiments, the core composition formed by combining the liquid PGS composition and the liquid isocyanate composition also includes a catalyst. The catalyst may be included in the liquid PGS composition or the liquid isocyanate composition. Appropriate catalysts may include, but are not limited to, catalysts containing metals and/or catalysts of metal salts, such as, for example, tin (II) 2-ethylhexanoate. Appropriate catalysts may contain or include, but are not limited to, tin, platinum, caffeine, potassium, sodium, calcium, magnesium, citric acid, citrate in salt form, such as, for example, potassium citrate, tartaric acid, and/or tartrate in salt form, such as, for example, potassium tartrate. In some embodiments, the catalyst is tin (II) 2-ethylhexanoate and an amount of catalyst is selected to provide a PGS:tin mass ratio in the range of 20:1 to 2000:1, alternatively about 800:1, or any value, range, or sub-range therebetween.

In exemplary embodiments, the core composition is a pre-polymer with a known working time, after which the urethane reaction takes place, the viscosity builds, and the PGSU finally cures into a solid elastomeric thermoset. The initial curing is preferably to a set-to-touch point where the PGSU holds its own shape and is no longer in a liquid state. Further curing to complete the reaction, where no residual isocyanate is left, requires additional time and/or heat. The PGS, isocyanate, and/or catalyst concentration may be varied, however, to change the working time and the time to complete cure.

Appropriate carrier polymers for the sheath solution may include, but are not limited to, alginate, fibrin, collagen, hyaluronic acid, sugars, polysaccharides, carbohydrates, NIPAm, poly(N-isopropylacrylamide), polyvinyl alcohol (PVA), polyethylene glycol (PEG), polycaprolactone (PCL), or poly(lactic-co-glycolic acid) (PLGA). In other embodiments, the carrier polymer is a PGS-based polymer that similarly cures within the timeframe of fiber processing, such as, for example, a PGS-based polymer that crosslinks in a specific liquid, a PGS-based polymer that photocrosslinks upon exposure to a specific wavelength of radiation, or a PGS-based polymer that thermally crosslinks upon exposure to specific radiation.

The choice of carrier polymer affects what carrier solvent may be used, and certain other processing parameters may also be affected. In exemplary embodiments, when the carrier polymer is alginate, the carrier solvent may be water and the concentration of the alginate, by weight of the sheath composition, is in the range of about 1% to about 7%, alternatively about 2% to about 6%, alternatively about 3% to about 5%, alternatively about 4%, or any value, range, or sub-range therebetween. When the carrier polymer is PVA, the carrier solvent may be water.

In exemplary embodiments, the concentrations of the liquid PGS composition and the liquid isocyanate composition are selected to permit the sheath-core effect in the wet spinning process. Viscosity, polymer solubility, and spinneret pressure limitations are also considered when selecting process parameters. In some embodiments, the viscosities of both the core composition and the sheath solution are close to each other at the point of contact, or alternatively the viscosity of the core composition viscosity is higher than that of the sheath solution. Moreover, in the process of wet spinning, where polymer solution is forced/pushed out into a solidification bath, the change of viscosity upon mixing and as reaction progresses is taken into consideration. In a sheath-core type of bicomponent fiber spinning process, the viscosity differences between the two materials may also affect the spinnability of the fiber as it exits the spinneret. The different placement of polymers in the bicomponent fibers may be obtained by providing different viscosities. As the two compositions are pushed through the coaxial needle, they rearrange to obtain the configuration providing the least amount of resistance to flow. To achieve this, the component with a lower viscosity moves to regions of greater shear, near the walls, leading to the encapsulation effect. Therefore, the viscosity of the sheath solution is preferably selected to be lower than that of the core polymer solution to get the sheath-core effect.

In exemplary embodiments, the surface energies of the carrier polymer and the core polymer, which determines the level of adhesion between the sheath and the core and therefore the final cross-sectional shape in the resultant bicomponent fiber, are considered when producing a sheath-core type of bicomponent fiber. Having the surface energy of the polymers close to each other provides fibers with circular or nearly circular cross sections.

In some embodiments, a gear pump circulates the liquid PGS composition and the liquid isocyanate composition. In other embodiments, a twin cylinder piston pump feeds the liquid PGS composition and the liquid isocyanate composition.

In some embodiments, the static mixer is a high-pressure mixing chamber with a high shear mixing tip to homogenize the two PGSU components. In exemplary embodiments, the liquid PGS composition and the liquid isocyanate composition are mixed under stirring to produce a homogenous solution that is then allowed to rest until all bubbles are eliminated. In exemplary embodiments, the core composition is pushed through the holes of the spinneret using a static mixer with a mass-controlled or volume-controlled gear or syringe pump.

The spinneret of the continuous PGSU/carrier bicomponent fiber forming system may be selected based on the form of the continuous PGSU/carrier bicomponent fiber being formed. For bicomponent monofilament production, a coaxial needle or a coaxial spinneret with a single hole may be used. When a multifilament is to be produced, the coaxial spinneret includes more than one hole. When the system includes coaxial spinnerets, the coaxial spinnerets may include as few as one hole and up to as many as 100 holes, such as, for example, one hole, 1-100 holes, 1-10 holes, 2-10 hole, 10-50 holes, 20-80 holes, 50-100 holes, or any value, range, or sub-range therebetween, to produce bicomponent sheath-core fibers. In some embodiments, the spinneret is a die.

When the spinneret is a coaxial spinneret, different characteristics from each polymer may be combined into one fiber by a coaxial spinning method. Some polymers with low spinnability may be spun using such a spinneret. In exemplary embodiments, the polymer with good spinnability is the sheath fiber, and the polymer with low spinnability is the core. Since PGS and PGSU are limited for fiber spinning, PGS is preferably in a core with isocyanate to form PGSU in the core.

In a wet spinning process, the spinneret may be a syringe/tank loaded with the polymer solutions and equipped with a needle and mounted on a syringe pump. For monofilament fiber production, a coaxial needle may be used to the produce PGSU/alginate core/sheath fiber. The dimensions of the coaxial needle may be varied to produce a desired product. The difference between the inner needle and the outer needle and the solution concentration may be adjusted to provide a predetermined thickness of the sheath. The inner diameter needle may be in the range of 18 to 24 gauge, such as, for example, 20 gauge, and the outer needle diameter may be in the range of 14 to 20 gauge, such as, for example, 14 gauge. Since the PGS and isocyanate mixture has a high viscosity and a sticky structure, the length of the inner needle is selected to help prevent clogging in the inner needle. In some embodiments, the length of the inner needle is in the range of 5 mm to 25 mm, alternatively 10 mm to 20 mm. Having a little bit longer inner needle, such as, for example, about 0.5 mm longer than the outer needle, may provide better structural development for the bicomponent fiber. This difference provides a time for the carrier polymer to solidify before the core polymer. This process may be conducted under normal room conditions. To ensure the encapsulation of PGSU, the sheath solution may be pushed through first before the core composition. This allows the PGS/isocyanate mixture of the core composition to be kept inside of the alginate to prevent the sticky fibers from contacting each other, therefore permitting a continuous process. For better processing, the material used in forming the core should have a viscosity greater than that of the sheath.

In some embodiments, the flow rate of the carrier solution relative to the core composition is controlled or altered by the respective pumps to be higher or lower to tune the resulting sheath thickness.

The separate pumping of the PGS resin and the isocyanate during the wet spinning process using separate pumps avoids viscosity changes resulting from reaction during the pumping. The PGS resin and isocyanate do not contact earlier in order to maintain a low enough viscosity for flow into the spinneret 16. Referring to FIG. 2, the mixture of PGS/isocyanate 60 and the carrier polymer solution 62 then enter into the spinneret separately. These two solutions contact as a bicomponent fiber as soon as both leave the spinneret 16, with the carrier polymer 62 being on the outside as the sheath part and the PGSU reactants 60 being on the inside as the core part of bicomponent fiber, as shown schematically in FIG. 2.

In exemplary embodiments, the formation of the sheath-core structure occurs at a temperature in the range of 4 to 40 °C, alternatively 15 to 25 °C, alternatively 20 to 25 °C, alternatively 23 to 40 °C, or any value, range, or sub-range therebetween, such as, for example, near room temperature. This roomtemperature extrusion allows for the inclusion of temperature-sensitive actives or biologics, which is not possible when forming melt-spun fibers including PLGA, PGA, or PCL, which occurs at temperatures in the range of about 100 °C to about 200 °C in melt-spinning processing.

Since the liquid PGS composition and the isocyanate mixture are in liquid form and very sticky during the reaction, the carrier material is provided to carry this liquid while the PGSU fiber is being produced. In exemplary embodiments, a sheath-core bicomponent fiber is produced where the sheath serves as a carrier polymer and contains the PGSU reactants as the core. After the fiber is wound up, the PGSU may continue reacting inside of the fiber, and with time, the mixture becomes thermoset PGSU. After the solidification, carrier polymer may be washed away, leaving behind 100% PGSU fiber. In exemplary embodiments, 100% PGSU fiber is produced that could not otherwise be produced using wet spinning.

In exemplary embodiments, a system and a process provide an appropriate amount of time for PGSU to solidify and form as a fiber in the core with a carrier polymer protecting the core while in liquid form from the limits of spinning. In exemplary embodiments, a process includes pushing polymers through spinnerets, forming fibers, solidifying or coagulating in a bath, and drawing and winding of fibers.

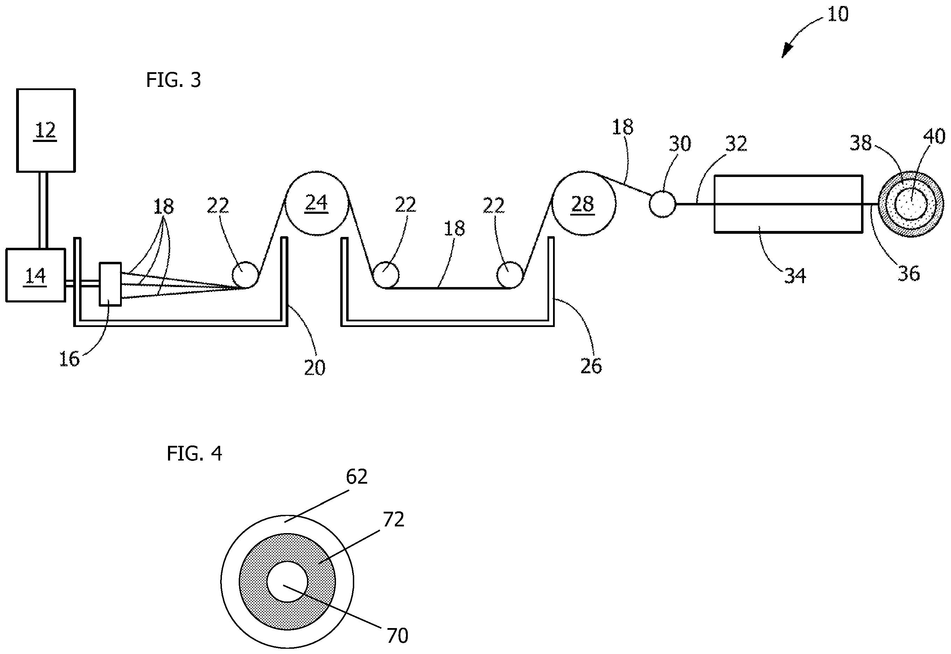

In an exemplary embodiment, a manufacturing process includes wet spinning a continuous PGSU/carrier bicomponent fiber with a carrier to carry PGS and isocyanate solution while they are in the process of reacting to produce the PGSU thermoset polymer. Referring to FIG. 3, a continuous PGSU fiber formation system 10 converts an aqueous solution of alginate, PGS, and isocyanate into a yarn 36. The alginate, PGS, and isocyanate are transferred from one or more feeding tanks 12 by one or more pumps 14 into one or more spinnerets 16. The PGSU fibers 18 being formed are pushed through the spinneret 16 and into a first coagulation or solidification bath 20. The PGSU fibers 18 are then drawn on a draw roll 22 through the first coagulation bath 20 and out of the first coagulation bath 20 by a first winder 24 and into a second coagulation bath 26. Additional draw rolls 22 direct the PGS/alginate multifilament fibers 18 through the second coagulation bath 26. A dryer 34 between the second winder 28 and the bobbin winder 40 may be used to remove water from sheath-core fiber 18 to achieve a predetermined moisture content in the sheath-core fiber 18. If a multifilament yarn 18 is being formed, as shown in FIG. 3, an intermingle 30 between the second winder 30 and the bobbin 38 receives and combines the PGSU fibers 18 into a multifilament yarn round 32. Finally, the PGSU fiber 18 is wound at a predetermined tension onto one or more bobbins 38.

In some embodiments, the coaxial needles of the spinneret are immersed directly in the first coagulation bath such that the polymeric mixture goes directly into the coagulation bath. In other embodiments, there is some distance between the coaxial needles and the first coagulation bath such that the polymeric mixture is first exposed to the ambient air before entering the first coagulation bath. Providing separation between the spinneret and coagulation bath may alter the molecular alignment of the PGS chains that make up the fiber and thereby affecting their strength when crosslinked and may provide a fiber with a reduced denier. Exposure to air provides an opportunity to expose the fibers to a vapor-phase crosslinker, such as, for example, vapor-phase glutaraldehyde, prior to coagulation in the bath which may permit formation of a sturdier shell material layer for the PGS.

In exemplary embodiments, the PGS resin and the isocyanate crosslinker are reacting with each other while the wet spinning process is occurring.

In exemplary embodiments, directly after the two polymer solutions comes out of the spinneret, they meet the first coagulation bath. When the carrier polymer is alginate, the coagulation bath is a solution of a salt containing a divalent cation, preferably calcium chloride for crosslinking the alginate, in water. The amount of salt in the first coagulation bath is preferably selected so that alginate polymer solution has enough time to surround the PGS/isocyanate liquid. Additionally, the salt amount is preferably selected to be sufficient so that the alginate is solidified fast so that PGS/isocyanate liquid does not break the alginate and leave the fiber.

The choice of carrier polymer affects what coagulation bath solution may be used. When the carrier polymer is alginate, the first coagulation bath is preferably an aqueous solution of calcium chloride. The coagulation bath salt concentration affects the solidification of the fiber. Appropriate amounts of calcium chloride in the first coagulation bath may include, but are not limited to, by weight, of about 2% to about 20%, alternatively about 3% to about 5%, alternatively about 2% to about 5%, alternatively about 5% to about 10%, alternatively about 10% to about 20%, or any value, range, or sub-range therebetween. When the carrier polymer is PVA, the first coagulation bath preferably includes water with a high amount of acetone. The liquid solution of the first coagulation bath extracts the solvent, leaving behind the polymer fibers so that a solidified fiber is drawn at a certain predetermined rate to provide its elongation and tenacity, preferably using godet rolls.

During the reaction of the PGS polyol resin and the isocyanate crosslinker, the presence of water can be detrimental to the reaction kinetics. The aqueous calcium chloride first coagulation might therefore otherwise be a concern when synthesizing PGSU, but the alginate sheath is able to completely shield the PGSU from the water bath and reaction kinetics are not interfered with. The aqueous properties at the alginate shell-PGSU core interface actually advantageously serve to neutralize isocyanate so that there are no undesired urethane linkages forming in the sheath layer that would prevent the easy removal of the sheath from the core fiber.

The second coagulation bath is also a salt solution, but the salt concentration is higher to assure that all of the alginate polymer on the fiber solidifies. The concentration of the salt in the bath and the length of the bath are directly related to achieving 100% solidification for the outside of the sheath part of the bicomponent fiber. The length of coagulation bath is selected based on a predetermined residence time of polymers in the bath. In some embodiments, the fiber is drawn in the second coagulation bath.

When the carrier polymer is alginate, the second coagulation bath is preferably also an aqueous solution of calcium chloride. Appropriate amounts of calcium chloride in the second coagulation bath may include, but are not limited to, by weight, about 10% to about 25%, alternatively about 18% to about 22%, alternatively about 20%, or any value, range, or sub-range therebetween. In some embodiments, while the fiber is in the second coagulation bath, it may still be drawn to produce a stronger fiber with orientation of the alginate molecule.

After the drawn fiber leaves the second coagulation bath, the fiber may be directly wound to a bobbin. Alternatively, another winder may be used to draw the fiber prior to winding to a bobbin. In such embodiments, heaters may be used on the fiber while the fiber is being drawn or further drawn.

In some embodiments, the parameters of the system are selected to time the reaction kinetics and optimize the concentrations of the PGS, isocyanate, and catalyst, in order to have the PGSU fiber cure at a specified point during extrusion or fiber drawing. The cure may be partial or complete during drawing the fiber. In some cases, further curing after extrusion and drawing may be desired.

If the alginate has not solidified completely after having been wound on a bobbin, the bobbin may be put into a calcium chloride bath for 5-10 minutes with a salt concentration in the range of about 3% to about 20%, alternatively about 3% to about 5%, alternatively about 5% to about 10%, alternatively about 10% to about 20%, or any value, range, or sub-range therebetween. This last process step allows all of the alginate to be solidified. After the bobbin is produced and/or taken out of calcium chloride bath, the fiber may be re-wound to another plastic package so that all the sticky connections between fibers are broken. After this rewinding, the fiber is preferably dried at room conditions for about 3 to 4 days to provide the PGSU/Alginate core/sheath structure.

In some embodiments, the resulting wound package of fibers may be kept in calcium chloride for about 5 minutes or longer to encourage crosslinking of the alginate. After that, the fiber may be rewound to a plastic package to prevent any sticking fiber after the drying. After the process, the sheath-core type of bicomponent fiber may kept for at least 72 hours without further processing to ensure that all of the PGSU has reacted and cured inside. The miscibility and wettability between the alginate component and the PGSU component may be optimized to produce bicomponent fibers with minimal comingling.

Depending on the application for the fibers, the PGSU/alginate core/sheath fiber may be washed using heated distilled water such that the alginate is washed out from the fiber, thereby producing a 100% PGSU fiber. This washing may be done while the fiber is on the package. Alternatively, this washing may be done by running the fiber directly into a bath continuously. In other embodiments, the alginate sheath is left behind on the PGSU fiber to improve lubricity of the product. In some embodiments the alginate sheath is chemically crosslinked.

In some embodiments, the alginate of the sheath is easily dissolved using ethylenediaminetetraacetic acid (EDTA) or sodium citrate to sequester and chelate calcium ions. In some embodiments, the alginate of the sheath is removed using mechanical means, alone or in combination with chemical degradation. In some embodiments, the alginate sheath is melted off the PGSU fiber, such as, for example, by a hot bath or an oven, such as, for example, when the alginate sheath is not crosslinked and has a melting temperature below the thermal decomposition point of the crosslinked PGSU of the core PGSU fiber. Scanning electron microscopy (SEM) images show a clear phase boundary between the alginate sheath and PGSU core, allowing for easy removal of the alginate sheath without compromising the PGSU fiber core. The curing may be complete or partial during drawing the fiber. As such, further curing after extrusion and drawing may be desired. In some embodiments, further PGSU fiber curing occurs after removal of the sheath, and hence in the absence of the sheath.

In some embodiments, the denier of the resulting PGSU fiber is in the range of 20 to 2000, alternatively 20 to 100, alternatively 100 to 500, alternatively 500 to 1000, alternatively 1000 to 2000, or any value, range, or sub-range therebetween.

In some embodiments, the resulting PGSU fiber is a biodegradable polyester fiber that is shelf-stable at room temperature and room humidity for over a year, without the need for cold storage like other biodegradable polyesters such as PLGA, polyglycolic acid (PGA), polylactic acid (PLA), and PCL.

In some embodiments, the PGSU fiber is simultaneously flexible and biodegradable.

In some embodiments, the crosslinking of the PGSU in the PGSU fiber is selected within a broad range to provide a predetermined stiffness, durometer, and degradation rate within a broad range of diverse properties, such as described in US 2020/0061240 A1 and incorporated by reference in its entirety.

A construct made of PGSU is biocompatible, shelf stable, biodegradable through surface erosion, elastic, and otherwise suitable for biomedical use. By tailoring the crosslinking density of PGSU, the degradation rate, elongation, and tensile strength may be tuned to the needs for a particular application of the PGSU fiber, such as described in US 2020/0061240 A1.

Appropriate applications for PGSU fibers may include, but are not limited to, PGSU yarns, PGSU fabrics, PGSU sutures, PGSU textiles, PGSU textiles coated with PGSU, PGSU composites, or other biomaterials, PGSU copolymer fibers, yarns, fabrics, or textiles made with other polymers, PGSU fibers with a shaped geometry such as sheath-core, multilobe, or complex cross-sections, PGSU electrospinning, PGSU additive manufacturing, PGSU filters for cell therapy, PGSU scaffolds for cell therapy, drug loaded PGSU fibers, or drug loaded PGSU filament for additive manufacturing.

In exemplary embodiments, the produced PGSU fiber is a basic unit in a manufacturing process to form a PGSU yarn, fabric, or textile.

PGS copolymer blends have been explored in an attempt to create a pure PGS fiber once the secondary polymer is removed in post-processing. PGSU fiber creation allows the creation of fibers, yarns, fabrics, and textiles made out of 100% PGS-based synthetic materials.

Exemplary embodiments are directed to processes of manufacturing continuous PGSU/carrier bicomponent fibers, processes of manufacturing fabrics including continuous PGSU fibers, yarns including continuous PGSU/carrier bicomponent and PGSU fibers, fabrics including continuous PGSU/carrier and PGSU fibers, and fabrics. The fabric structures may be formed by weaving, knitting, or braiding.

In some embodiments, the fiber, yarn, fabric, or textile is used in a medical application, is biodegradable, and has elastomeric properties.

In some embodiments, a yarn includes a continuous PGS/carrier bicomponent and PGSU fiber.

In some embodiments, a yarn includes monofilament or multifilament PGSU fiber.

In some embodiments, fabrics are produced from continuous PGSU/carrier fibers and yarns.

In some embodiments, different PGSU fibers having different crosslink densities are used within the same textile construct to provide different degradation rates in different areas of the textile. In such embodiments, the arrangement of the different PGSU fibers is controlled to create a porosity within the textile as the low-crosslink density fiber degrades and the more highly crosslinked material remains.

In some embodiments, the PGSU fiber is used in fabric form in the body so that the material is breathable and allow tissue generation while PGSU is degrading.

In some embodiments, a PGSU fiber is loaded with one or more drugs. The drug may be included in the liquid PGS composition or the liquid alginate composition such that the drug is distributed throughout the PGSU fiber. In some embodiments, the drug is one or more active pharmaceutical ingredients (APIs). PGSU is capable of maintaining zero-order release kinetics of the drug via surface erosion degradation, unlike bulk-eroding and diffusion-driven release polymers like PLGA and PCL, respectively.

Any appropriate API may be included in the PGSU fiber. Appropriate types of APIs may include, but are not limited to, therapeutic agents (such as, for example antibiotics, non-steroidal anti-inflammatory drugs (NSAIDs), glaucoma, macular degeneration, and other ophthalmologic medications, angiogenesis inhibitors, drugs to treat diabetes, drugs to treat neurodegeneration, and/or neuroprotective agents), cytotoxic agents, diagnostic agents (such as, for example, contrast agents, radionuclides, fluorescent moieties, luminescent moieties, and/or magnetic moieties), prophylactic agents (such as, for example, vaccines, drugs for human immunodeficiency virus (HIV) prophylaxis and HIV treatment, contraceptive drugs), pain management agents, addiction management agents (such as, for example, opioids, and/or nicotine), plant or herbal extracts (such as, for example, a cannabinoid, such as, for example, tetrahydrocannabinol) and/or nutraceutical agents (such as, for example, vitamins, caffeine, and/or minerals).

Appropriate API therapeutic agents may include, but are not limited to, small molecules, such as, for example, cytotoxic agents; nucleic acids, such as, for example, small interfering ribonucleic acid (siRNA), RNA interference (RNAi), and/or microRNA agents; proteins, such as, for example, growth factors and/or antibodies; peptides; lipids; carbohydrates; hormones; metals; radioactive elements and compounds; drugs; vaccines; and/or immunological agents.

Appropriate API therapeutic agents may additionally or alternatively include, but are not limited to, small molecules with pharmaceutical activity, organic compounds with pharmaceutical activity, clinically-used drugs, antibiotics (such as, for example, penicillin), anti-viral agents, anesthetics, anticoagulants, anticancer agents, inhibitors of enzymes (such as, for example, clavulanic acid), promotors of enzymes, steroidal agents, pro-healing agents, pro-polymer degradation agents, anti-oxidants, anti-inflammatory agents, anti-neoplastic agents, antigens, vaccines, antibodies, decongestants, antihypertensives, sedatives, birth control agents, progestational agents, anti-cholinergics, analgesics, anti-depressants, anti-psychotics, β-adrenergic blocking agents, diuretics, cardiovascular active agents, vasoactive agents (such as, for example, epinephrine), anti-glaucoma agents, neuroprotectants, angiogenesis promotors, and/or angiogenesis inhibitors.

Appropriate API antibiotics may include, but are not limited to, β-lactam antibiotics (such as, for example, ampicillin, aziocillin, aztreonam, carbenicillin, cefoperazone, ceftriaxone, cephaloridine, cephalothin, cloxacillin, moxalactam, penicillin G, piperacillin, and/or ticarcillin), macrolides, monobactams, rifamycins, tetracyclines, chloramphenicol, clindamycin, lincomycin, fusidic acid, novobiocin, fosfomycin, fusidate sodium, capreomycin, colistimethate, gramicidin, minocycline, doxycycline, bacitracin, erythromycin, nalidixic acid, vancomycin, and trimethoprim. The antibiotic may be bacteriocidial or bacteriostatic. Appropriate types of other anti-microbial agents as APIs may include, but are not limited to, anti-viral agents, anti-protazoal agents, and/or anti-parasitic agents.

Appropriate API anti-inflammatory agents may include, but are not limited to, corticosteroids (such as, for example, glucocorticoids), cycloplegics, NSAIDs, and/or immune selective anti-inflammatory derivatives (ImSAIDs).

Appropriate API NSAIDs may include, but are not limited to, celecoxib, rofecoxib, etoricoxib, meloxicam, valdecoxib, diclofenac, etodolac, sulindac, aspirin, alclofenac, fenclofenac, diflunisal, benorylate, fosfosal, salicylic acid including acetylsalicylic acid, sodium acetylsalicylic acid, calcium acetylsalicylic acid, and sodium salicylate; ibuprofen, ketoprofen, carprofen, fenbufen, flurbiprofen, oxaprozin, suprofen, triaprofenic acid, fenoprofen, indoprofen, piroprofen, flufenamic, mefenamic, meclofenamic, niflumic, salsalate, rolmerin, fentiazac, tilomisole, oxyphenbutazone, phenylbutazone, apazone, feprazone, sudoxicam, isoxicam, tenoxicam, piroxicam, indomethacin, nabumetone, naproxen, tolmetin, lumiracoxib, parecoxib, and/or licofelone, including pharmaceutically acceptable salts, isomers, enantiomers, derivatives, prodrugs, crystal polymorphs, amorphous modifications, and/or co-crystals.

Appropriate types of APIs may include, but are not limited to, agents having NSAID-like activity, including, but not limited to, non-selective cyclooxygenase (COX) inhibitors, selective COX-2 inhibitors, selective COX-1 inhibitors, and/or COX-LOX inhibitors, as well as pharmaceutically acceptable salts, isomers, enantiomers, polymorphic crystal forms including the amorphous form, co-crystals, derivatives, and/or prodrugs thereof.

Appropriate APIs may alternatively or additionally include, but are not limited to, adriamycin/bleomycin/vinblastine/dacarbazine (ABVD), avicine, acetaminophen, acetylsalicylic acid, acridine carboxamide, actinomycin, alkylating antineoplastic agent, 17-N-allylamino-17-demethoxygeldanamycin, aminopterin, amsacrine, anthracycline, antineoplastic, antineoplaston, antitumorigenic herbs, 5-azacytidine, azathioprine, triplatin tetranitrate (BBR3464), BL22, bifonazole, biosynthesis of doxorubicin, biricodar, bleomycin, bortezomib, bryostatin, buprenorphine, busulfan, cabotegravir, caffeine, calyculin, camptothecin, capecitabine, carboplatin, chlorambucil, chloramphenicol, cisplatin, cladribine, clofarabine, cyclophosphamide, cytarabine, dacarbazine, dasatinib, daunorubicin, decitabine, dexamethasone, diazepam, dichloroacetic acid, discodermolide, diltiazem, docetaxel, dolutegravir, doxorubicin, epirubicin, epothilone, estramustine, 4'-ethynyl-2-fluoro-2'-deoxyadenosine (EFdA), etonogestrel, etoposide, everolimus, exatecan, exisulind, fentanyl, ferruginol, floxuridine, fludarabine, fluorouracil, 5-fluorouracil, fosfestrol, fotemustine, gemcitabine, hydroxyurea, ibuprofen, idarubicin, ifosfamide, imiquimod, indomethacin, irinotecan, irofulven, ixabepilone, laminvudine, lapatinib, lenalidomide, liposomal daunorubicin, lorazepam, lurtotecan, mafosfamide, masoprocol, mechlorethamine, melphalan, mercaptopurine, metformin, methadone, methotrexate, metoclopramide, mitomycin, mitotane, mitoxantrone, naloxone, naproxen, nelarabine, niacinamide, nicotine, nilotinib, nitrogen mustard, oxaliplatin, first procaspase activating compound (PAC-1), paclitaxel, paracetamol, pawpaw, pemetrexed, pentostatin, pipobroman, pixantrone, polyaspirin, plicamycin, prednisone, procarbazine, proteasome inhibitor, raltitrexed, rebeccamycin, rilpivirine, risperidone, ropinirole, 7-ethyl-10-hydroxy-camptothecin (SN-38), salbutamol, salinosporamide A, satraplatin, sildenafil, sirolimus, Stanford V, stiripentol, streptozotocin, swainsonine, tadalafil, taxane, tegafur-uracil, temozolomide, tenofovir, testosterone, tetryzoline, N,N',N"-triethylenethiophosphoramide (ThioTEPA), tioguanine, tolbutamide, topotecan, trabectedin, trazodone, tretinoin, tris(2-chloroethyl)amine, troxacitabine, uracil mustard, valrubicin, vinblastine, vincristine, vinorelbine, vorinostat, zolpidem, and/or zosuquidar.

In some embodiments, the PGSU fibers are loaded with a drug at up to an 80% w/w loading. The drug may be in a solubilized or amorphous form if the drug is soluble in the PGSU pre-polymer solvent system or soluble in the PGS resin or isocyanate components. Alternatively, the drug may be in a crystalline particle form if the drug is insoluble in the solvent system or if the system is solvent-free. The drug may form an amorphous solid dispersion within PGSU, if the drug-loaded PGSU formulation is processed above the glass transition temperature of the drug.

Drug-loaded PGSU fibers provide a significant advantage for various therapeutic applications, since PGSU has been shown to provide sustained drug release.

In some embodiments, the PGSU fibers are loaded with more than one drug. The core and sheath materials, or PGSU and alginate materials depending on geometry and if alginate is left in place, may each be loaded with one, more than one, or different drugs. Drug-loaded PGSU fibers may be extruded into different cross-sectional shapes, which leads to different drug release kinetics. Drugs may release by diffusion, surface erosion, bulk degradation, or a combination of these. The surface area and surface area:volume ratio are important parameters for dictating the release kinetics for these mechanisms.

In some embodiments, the PGS resin for a drug-loaded PGSU fiber is a chemically-characterized PGS resin, as described in US 2020/0061240 A1.

In some embodiments, the sheath material around the PGSU fiber remains substantially intact without defect and with low or zero permeability. In such cases, drug release occurs primarily at the unsheathed ends of a fiber rather than through the sheathed circumference. In such embodiments, the sheathed fibers may be cut into shorter fragmented fiber pieces to increase the drug release rate while still providing substantially only end-release of drug from the sheathed fibers.

In some embodiments, the PGSU fibers are formulated with a swelling agent. Appropriate swelling agents may include, but are not limited to PEG, alginate, gelatin, collagen, hydrogel, or a hydrophilic amino acid, such as, for example, arginine, histidine, lysine, aspartic acid, or glutamic acid. In exemplary embodiments, the swelling agent is included in the liquid PGS composition or the liquid isocyanate composition such that the swelling agent is homogenously distributed in the PGSU fiber such that the whole fiber swells in an aqueous liquid. In exemplary embodiments, inclusion of the swelling agent provides a PGSU fiber and/or textile that is capable of swelling to at least twice its original size once implanted.

Formulations of PGSU fibers with swelling agents are a promising biodegradable hydrogel fiber technology. Hydrogels have long been studied for their use in tissue engineering for their biomimetic mechanical properties, swelling capability to allow diffusion and transport of key cell nutrients, and their biodegradability. PGSU hydrogel materials are a superior choice to other commercial hydrogels due to the longer degradation time, flexibility, and controlled swellability of PGSU hydrogel formulations. PGSU hydrogel material wet-spun into a fiber permits the creation of hydrogel textiles including intricate 3D designs that are imperative to cell scaffolding. In some embodiments, a porous textile including PGSU hydrogel fibers becomes non-porous after swelling of the hydrogel fibers in vivo. In other embodiments, the swelling out of a textile after being placed into the body serves as a networked molecular structure that becomes more extended/expanded to promote cell infiltration throughout the textile structure and the yarns that make up the structure. In contrast, a conventional textile only has cell infiltration on the surface or through any gaps in the structure. In other embodiments, a swellable agent applied to the PGSU material creates a fiber that expands to infill suture holes when making contact with interstitial fluids. The swellable PGSU fiber may be a textile that was sutured where holes were left behind, or the swellable PGSU fiber may be the suture itself.

In some embodiments, a PGSU hydrogel fiber composition includes the PGS polyol, diisocyanate crosslinker, tin (II) 2-ethylhexanoate catalyst, and PEG with a weight average molecular weight (Mw) below 3,000 Da. Crosslinking of the PGSU hydrogel fiber is expected to have similar reaction kinetics during wet-spinning as the PGSU fiber without PEG. Similar solvated and solvent-free methods of preparing the PGSU hydrogel fiber may be used, the only additional step being combining the swell agent (PEG). This hydrogel fiber material may be successful in a wound care, abdominal, and other tissue engineering applications.

In some embodiments, the fiber is extruded into a solution chilled to a temperature below room temperature but above freezing. In some embodiments, the sheath material has a melting temperature near room temperature or body temperature as a method of removal from the PGSU fiber once the fiber is taken out of the chilled bath. In some embodiments, the PGSU fibers formed in a chilled bath are loaded with enzymes.

In some embodiments, an alginate core 70 is surrounded by a PGSU sheath 72, which is then surrounded by an alginate sheath 62, as shown schematically in FIG. 4. Such a structure may be formed, for example, by a triaxial extrusion where all three phases are extruded in parallel simultaneously, analogous to the coaxial extrusion process described herein having a PGS core. The outer alginate sheath 62 then assists in the formation of the PGSU sheath 72. The alginate inner core 70 and/or outer sheath 62 may be left in place or removed. If both are removed, this yields a hollow PGSU fiber. Since PGSU is water impermeable, the outer alginate sheath 62 may be removed using a chelating solution while the inner alginate core 70 remains protected. If only the outer alginate sheath is removed, this yields a shell PGSU fiber with an infilled alginate core. In some embodiments, cells are added to the central hydrophilic alginate core to make a cell-laden fiber or yarn.

In some embodiments, the alginate core is produced first and fed to the system using a triaxial needle. For example, a combined continuous process includes producing an alginate core as a fiber using a needle followed by a calcium chloride coagulation bath. Then instead of winding this alginate fiber, the alginate fiber may be fed directly through the triaxial needle in the core. Then the core composition and the sheath composition are fed around the core alginate, while the core alginate fiber is going through. In some embodiments, the composition of the alginate in the core is similar to or the same as the composition of the alginate sheath. In other embodiments, the alginate in the core is at a higher concentration, such as, for example, 4 to 8 wt%, alternatively 5 to 7 wt%, alternatively about 6 wt%, or any value, range, or sub-range therebetween. In other embodiments, any water-soluble core may be used with sufficient density to prevent collapse of the PGSU shell inwards during construction. In some embodiments, the hydrophilic core is not crosslinked. The outer sheath should have a viscosity lower or equal to the inner sheath to over which it is applied.

In other embodiments, the hydrophilic core material is composed of another synthetic hydrophilic polymer, such as, for example, PVA or PEG, or another naturally-derived biopolymer. Appropriate naturally-derived biopolymers may include, but are not limited to, hyaluronic acid, collagen, fibrin, agar, and/or chitosan. In other embodiments, the cell-laden core includes a combination of additional cell nutrients. Appropriate cell nutrients may include, but are not limited to, glucose, vitamins, amino acids, growth factors, antigens, proteins, and/or other cell signaling molecules.

In some embodiments, soluble porogens are formulated into the PGS core composition prior to extrusion for formation of a PGSU fiber incorporating the porogen. Appropriate soluble porogens may include, but are not limited to, salt, sugar, or starch. Such formulations permit porogen leaching on the formed PGSU fiber, yielding a porous PGSU fiber. In some embodiments, the porogens are included in the PGSU fiber as a monolithic fiber, a hollow fiber, a sheath fiber, a shaped fiber, or other geometry, to create a more porous PGSU having a higher permeability. A more porous PGSU also degrades more quickly, due to a higher surface area that is susceptible to surface erosion.

In some embodiments, a hydrophobic polymer is precipitated as a sheath layer covering the PGSU core. Appropriate hydrophobic polymers may include, but are not limited to, PLGA or PCL. For example, for a 40% solids PGSU core solution and an 80% solids PCL sheath solution, the density difference is sufficient to keep the two phases separated. The PCL and organic solvent phase precipitates out as a shell layer over the PGSU. In other embodiments, the organic phase has some miscibility with the aqueous phase and leaches out, generating micropores in the shell layer, which can provide a mechanism for control release of drug. Such leaching and micropores has been previously reported by electrospinning PLGA solubilized fibers into an aqueous collection bath.

In some embodiments, the PGSU fibers are used for cell therapy as a cell-laden construct to implant in the body. Such cells may be therapeutic themselves and/or may excrete therapeutic agents. In some embodiments, the cells are cultured on the surface of solid PGSU fibers. In some embodiments, the hollow PGSU fibers are filled with cells on the interior. In some embodiments, cells are cultured both on the inside and the outside surfaces of hollow PGSU fibers, where the cells on the inside and outside may be the same or different cell types. In embodiments including a PGSU shell fiber with alginate core, cells may be incorporated in the alginate core. In such fibers, the cells are protected on the interior within an alginate hydrogel.

Alginate is a cell-friendly material providing or permitting cell encapsulation, viability, expansion, proliferation, differentiation, transfection, transduction, and/or manipulation. The PGSU provides a protective sheath that shields the cells from the body's immune system upon implantation. Crosslinking, surface modification, surface functionalization, and/or surface decoration of the PGSU may be used to create a sheath that hides from, minimizes, or is inert to the immune response. Gas transport, such as the oxygen and carbon dioxide necessary to maintain cell health, occurs through PGSU. Although PGSU does not as readily allow liquid transport, the 2-3% w/w immediate swelling behavior of PGSU may be sufficient to allow liquid transport of small and large molecules of nutrients and/or therapeutics.

In some embodiments, the degree of PGSU crosslinking, which affects permeability and polymer matrix mesh size, is adapted to optimize transport of small and large molecule nutrients and/or therapeutics. In some embodiments, PGSU permeability is further enhanced by including a porogen for leaching, where the porogen dimensions directly create void spaces in the PGSU matrix that nutrients and/or therapeutics pass through. The porogen dimension may be chosen so that cells cannot pass through but small and large molecules can. Such dimensions may be in the range of 100 nm to 5 µm, alternatively 100 nm to 500 nm, alternatively 500 nm to 1 µm, alternatively 1 µm to 5 µm, or any value, range, or sub-range therebetween. This porous sheath keeps the therapeutic cells in the interior, as intended for protection, while the body's immune cells and native cells are kept on the outside, as intended, so they cannot invade and destroy the therapeutic cells.

The porogen dimensions and loading concentration may be selected to control percolation through the PGSU matrix. In some cases only small molecule transport is desired. In other cases small and large molecule transport is desired. The combination of percolation and permeability may be tuned to allow selective transport. The porogen itself may be a nutrient or therapeutic. The porogen itself may be used to shield or minimize the inflammatory response. The porogen itself may be an agent that improves the viability of therapeutic cells upon implantation. The porogen may diffuse out slowly over many days or weeks, or the porogen may diffuse out immediately to provide a burst release of nutrients and/or therapeutics to the site of implantation. The porogen may also be released slowly by the degradation of PGSU over time.

Although products, systems, and processes have been described herein with respect to PGSU as the continuous fiber polymer, continuous fibers of other urethane-crosslinked polyester copolymers of polyol monomer and diacid monomer may alternatively be formed by the systems and processes described herein.

Alternative appropriate polyol monomers to glycerol may include, but are not limited to, diol monomers or other triol monomers.

Alternative appropriate diacid monomers to sebacic acid may include, but are not limited to, other diacids of the formula [HOOC(CH₂)ₙCOOH], where n = 1-30, such as, for example, malonic acid, succinic acid, glutaric acid, adipic acid, pimelic acid, suberic acid, or azelaic acid.

### EXAMPLES

The invention is further described in the context of the following examples which are presented by way of illustration, not of limitation.

### EXAMPLE 1

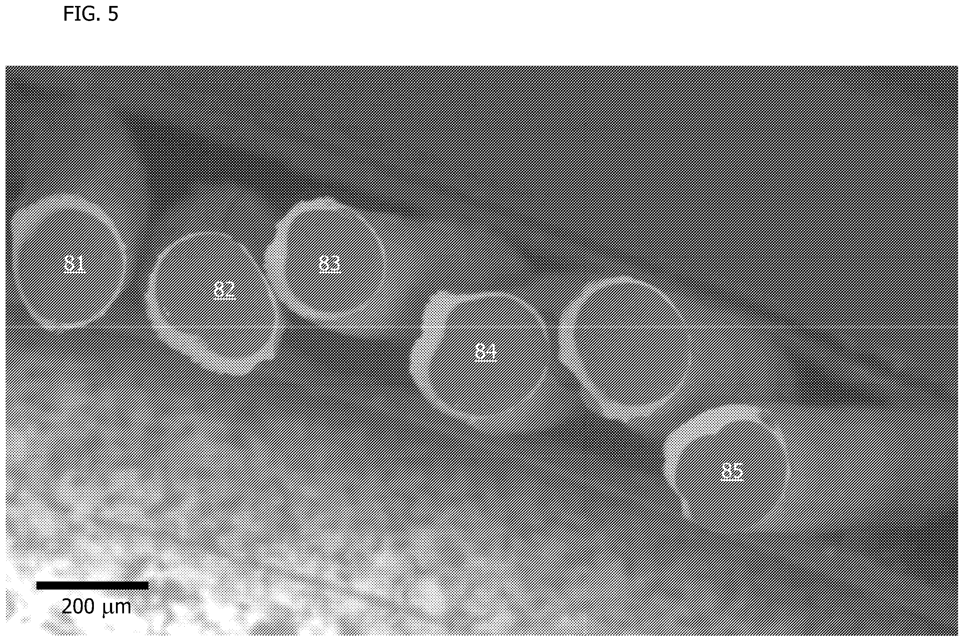

A continuous core/sheath fiber was formed by wet spinning in which the core resin polymer was PGS and the isocyanate was HDI, and the catalyst was tin (II) 2-ethylhexanoate while the sheath polymer was sodium alginate. The PGS:HDI mass ratio was 3.5:1 and PGS:tin mass ratio was 800:1 in a 60% wt. PGSU concentration in organic solvent; sodium alginate was 4% wt. in an aqueous solvent. The compositions were mechanically stirred to produce homogeneous solutions. The wet spinning line included a coagulation bath (3% wt. CaCl₂) and a drawing-winding system. Coaxial needles were used to produce bicomponent core-sheath fibers. The sheath composition feed rate was 1.5 mL/min and the core composition feed rate was 0.5 mL/min. Both drawing and winding speeds were 5 m/min. The resulting fibers are shown in the SEM image of FIG. 5, where the remaining alginate sheath in the fiber cross section appears much lighter in color than the PGSU core.

Long and short cross sectional dimensions were determined for the PGSU for five of the fibers in FIG. 5. A first fiber 81, excluding the sheath, had a long dimension of about 196.4 µm, a short dimension perpendicular to the long dimension of about 184.0 µm, and an aspect ratio (long dimension/short dimension) of about 1.07. A second fiber 82, excluding the sheath, had a long dimension of about 232.4 µm, a short dimension of about 180.1 µm, and an aspect ratio of about 1.29, with a maximum sheath thickness of about 31.1 µm. A third fiber 83, excluding the sheath, had a long dimension of about 180.0 µm, a short dimension of about 173.7 µm, and an aspect ratio of about 1.04. A fourth fiber 84 had a long dimension of about 211.0 µm, a short dimension of about 200.8 µm, and an aspect ratio of about 1.05. A fifth fiber 85 had a long dimension of about 191.5 µm, a short dimension of about 175.6 µm, and an aspect ratio of about 1.09.

### EXAMPLE 2

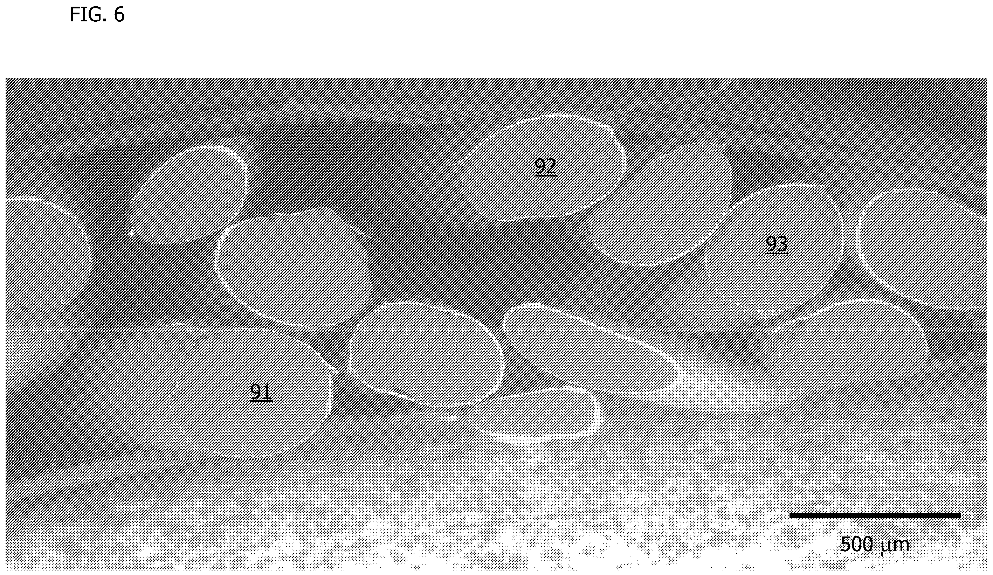

The process of Example 2 differed from the process of Example 1 in that the sheath composition feed rate was 1.0 mL/min and the core composition feed rate was 1.0 mL/min. The resulting fibers are shown in the SEM image of FIG. 6.

Long and short cross sectional dimensions were determined for the PGSU for three of the fibers in FIG. 6. These fibers had a significantly larger cross sectional area than those in the first image and also had greater aspect ratios. A first fiber 91, excluding the sheath, had a long dimension of about 449.1 µm, a short dimension of about 366.1 µm, and an aspect ratio of about 1.23. A second fiber 92, excluding the sheath, had a long dimension of about 460.5 µm, a short dimension of about 287.5 µm, and an aspect ratio of about 1.60. A third fiber 93 had a long dimension of about 420.2 µm, a short dimension of about 337.9 µm, and an aspect ratio of about 1.24.

### EXAMPLE 3

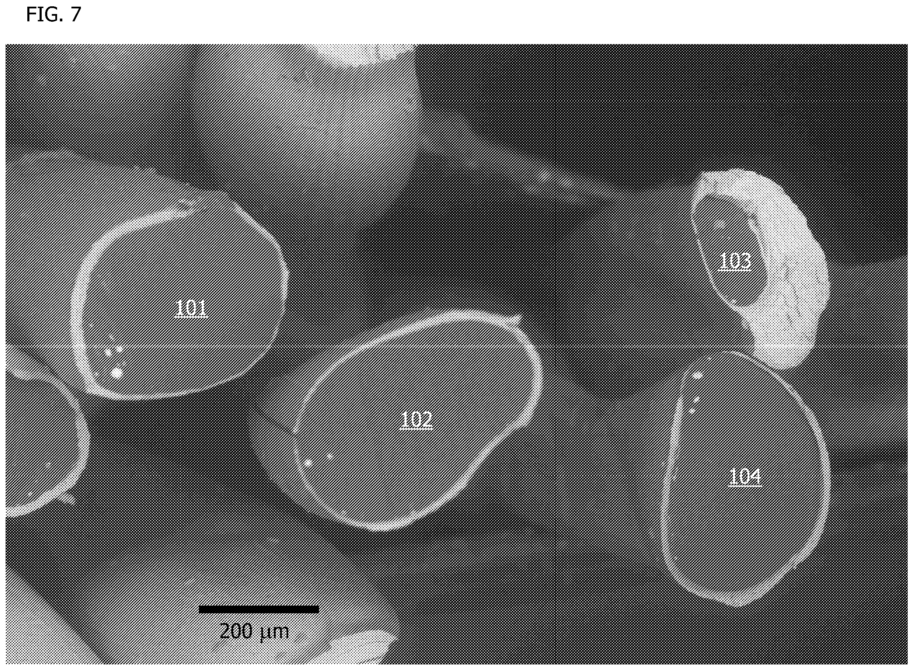

The process of Example 3 differed from the process of Example 1 in that no catalyst was included, the sheath composition feed rate was 2.0 mL/min and the core composition feed rate was 0.5 mL/min, the wet spinning line included a second coagulation bath, the drawing speed was 5.5 m/min, and the winding speed was 6.5 m/min. The resulting fibers are shown in the SEM image of FIG. 7.

Long and short cross sectional dimensions were determined for four of the fibers in FIG. 7. These dimensions included the PGSU and the remaining alginate sheath. A first fiber 101, including the sheath, had a long dimension of about 365.5 µm, a short dimension of about 318.0 µm, and an aspect ratio of about 1.15, with a maximum sheath thickness of about 16.6 µm. A second fiber 102, including the sheath, had a long dimension of about 436.5 µm, a short dimension of about 282.9 µm, and an aspect ratio of about 1.54. A third fiber 103, including the sheath, had a long dimension of about 346.9 µm, a short dimension of about 179.5 µm, and an aspect ratio of about 1.93, with a large portion of those dimensions being the sheath. A fourth fiber had a long dimension of about 428.4 µm, a short dimension of about 277.7 µm, and an aspect ratio of about 1.54, with a maximum sheath thickness of about 16.6 µm.

### EXAMPLE 4

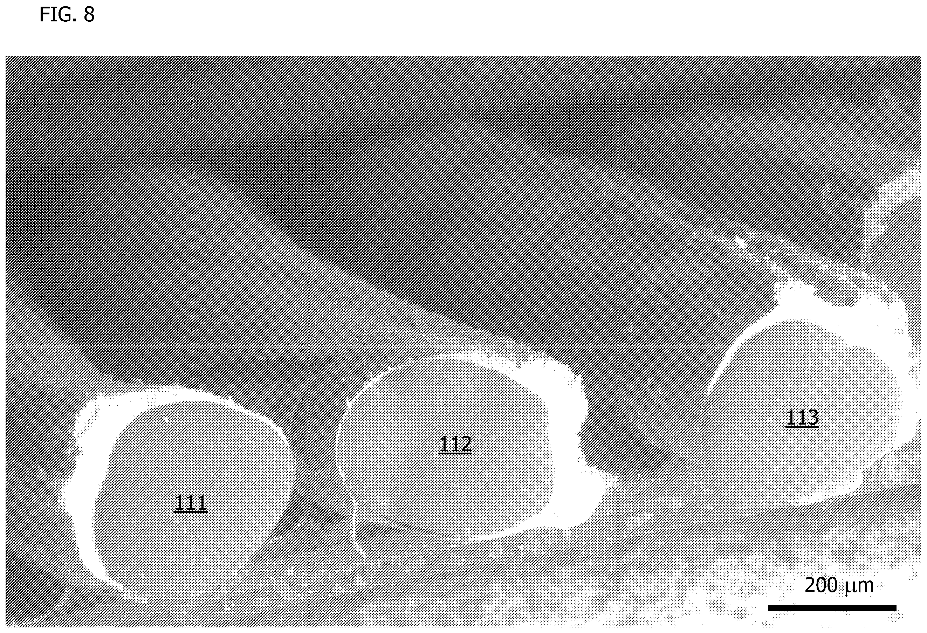

The process of Example 4 differed from the process of Example 1 in that the catalyst mass ratio was 400:1 in a 75% wt. PGSU concentration in organic solvent; sheath composition feed rate was 6.0 mL/min and the core composition feed rate was 1.0 mL/min; the wet spinning line included a second coagulation bath; the drawing speed was 7.5 m/min, and the winding speed was 7.5 m/min. The resulting fibers are shown in the SEM image of FIG. 8.

Long and short cross sectional dimensions were determined for the PGSU for three of the fibers in the SEM image of FIG. 8. These dimensions included the PGSU and the remaining alginate sheath A first fiber 111 had a long dimension of about 358.9 µm, a short dimension of about 316.4 µm, and an aspect ratio of about 1.13. A second fiber 112 had a long dimension of about 417.1 µm, a short dimension of about 288.4 µm, and an aspect ratio of about 1.44. A third fiber 113 had a long dimension of about 402.4 µm, a short dimension of about 258.3 µm, and an aspect ratio of about 1.56.

### EXAMPLE 5

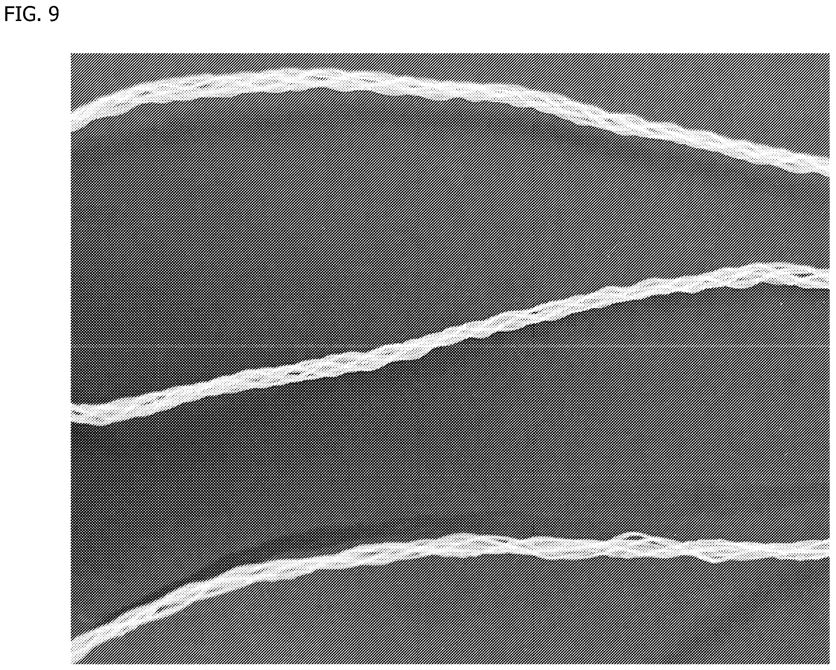

PGSU-alginate core-sheath monofilament fiber was used to produce a fabric surface. A PGSU-alginate suture was braided with 16 carrier braiders in a vertical system. Eight of the carriers were used with 30 rpm braiding speed while the pick number of the suture was 5 picks/inch. The resulting suture is shown in FIG. 9.

## Claims

1. A manufacturing process comprising:
combining a liquid resin with a liquid reactive cross-linking composition to form a reactive core composition, wherein the liquid resin is a liquid poly(glycerol sebacate) (PGS) composition comprising PGS resin, and wherein the liquid reactive crosslinking composition is a liquid isocyanate composition comprising at least one isocyanate;
contacting the reactive core composition with a sheath composition comprising a carrier polymer in a solvent; and
wet spinning the reactive core composition with the sheath composition to form a sheath-core fiber comprising a core comprising at least one continuous fiber of a reaction product of the liquid resin and liquid cross-linking composition and a sheath surrounding the core, the cross-linking composition reacting with the resin during the wet spinning, the sheath comprising the carrier polymer, wherein the at least one continuous fiber is at least one continuous poly(glycerol sebacate) urethane (PGSU) fiber, and the isocyanate reacts with the PGS resin to form PGSU during the wet spinning.

2. The manufacturing process of claim 1 further comprising at least one of the following steps:
drafting the sheath-core fiber in at least one coagulation bath;
drawing the sheath-core fiber from the at least one coagulation bath;
drying the sheath-core fiber to form a yarn having a predetermined moisture content; and
removing the carrier polymer from the sheath-core fiber.

3. The manufacturing process of claim 1, wherein the carrier polymer is selected from the group consisting of alginate, fibrin, collagen, hyaluronic acid, a polysaccharide, a carbohydrate, poly(N-isopropylacrylamide), polyvinyl alcohol, polyethylene glycol, polycaprolactone, and poly(lactic-co-glycolic acid).

4. The manufacturing process of claim 1, wherein the reactive core composition further comprises at least one catalyst.

5. The manufacturing process of claim 1 further comprising:
drafting the sheath-core fiber in at least one coagulation bath; and
drawing the sheath-core fiber from the at least one coagulation bath;
wherein the at least one coagulation bath comprises a first coagulation bath containing a first coagulation solution comprising about 2% to about 20% by weight of a salt containing a divalent cation in water,
preferably wherein the at least one coagulation bath further comprises a second coagulation bath containing a second coagulation solution comprising about 20% by weight of the salt containing the divalent cation in distilled water.

6. The manufacturing process of claim 1, wherein the at least one continuous PGSU fiber comprises a plurality of continuous PGSU fibers, the method further comprising intermingling the plurality of continuous PGSU fibers to form a multifilament yarn round.

7. The manufacturing process of claim 1 further comprising at least one of the following steps:
drying the sheath-core fiber to form a yarn having a predetermined moisture content; and
removing the carrier polymer from the sheath-core fiber and curing the at least one continuous PGSU fiber after removing the carrier polymer from the sheath-core fiber.

8. The manufacturing process of claim 1, wherein the process comprises at least one of the following features:
the carrier polymer is alginate and the sheath composition is an alginate solution comprising the alginate in water at 1% to 7% by weight of the alginate solution;
the liquid PGS composition further comprises an organic solvent;
the liquid isocyanate composition comprises hexamethylene diisocyanate; and
the core composition further comprises at least one catalyst comprising tin (II) 2-ethylhexanoate.

9. The manufacturing process of claim 1 wherein the sheath composition is an alginate, the alginate solution comprising an alginate in water at 1% to 7% by weight of the alginate solution;
wherein the contacting comprises feeding the reactive core composition and the alginate solution through a spinneret to form the sheath-core fiber comprising the core comprising the at least one continuous poly(glycerol sebacate) urethane (PGSU) fiber and the sheath surrounding the core, the sheath comprising the alginate, wherein the wet spinning further comprises:
drafting the sheath-core fiber in at least one coagulation bath; and
drawing the sheath-core fiber from the at least one coagulation bath;
wherein the at least one coagulation bath comprises a first coagulation bath containing a first coagulation solution comprising about 2% to about 20% by weight calcium chloride in water; and
wherein the isocyanate reacts with the PGS resin to form PGSU during the wet spinning.

10. An article comprising at least one continuous poly(glycerol sebacate) urethane (PGSU) fiber comprising PGSU.

11. The article of claim 10 further comprising a sheath comprising a carrier polymer around the at least one continuous PGSU fiber, preferably wherein the carrier polymer is alginate.

12. The article of claim 10 further comprising at least one drug loaded in the PGSU or at least one porogen loaded in the PGSU.

13. The article of claim 10, wherein the article is a yarn or
wherein the article is a fabric or
wherein the article consists of the PGSU.

14. A continuous poly(glycerol sebacate) urethane (PGSU) fiber forming system comprising:
a first feeding tank holding a liquid poly(glycerol sebacate) (PGS) composition comprising PGS resin;
a second feeding tank holding a liquid isocyanate composition comprising at least one isocyanate;
a third feeding tank holding a sheath solution comprising a carrier polymer;
a first pump receiving the liquid PGS composition from the first feeding tank and pumping the liquid PGS composition to a mixer;
a second pump receiving the liquid isocyanate composition from the second feeding tank and pumping the liquid isocyanate composition to the mixer;
a third pump receiving the sheath solution from the third feeding tank and pumping the sheath solution to a spinneret;
the mixer mixing the liquid PGS composition with the liquid isocyanate composition to form a core composition and feeding the core composition to the spinneret;
the spinneret receiving and transferring the core composition and the sheath solution to form a sheath-core fiber comprising a sheath comprising the sheath solution and a core comprising a continuous PGSU fiber from the core composition by wet-spinning, wherein the at least one isocyanate and the PGS resin in the core composition react during the wet-spinning to form the continuous PGSU fiber; and
a first coagulation bath holding a first solidification solution and receiving the sheath-core fiber from the spinneret.

## Patentansprüche

1. Herstellungsverfahren, das Folgendes umfasst:
Mischen eines flüssigen Harzes mit einer flüssigen, reaktiven Vernetzungszusammensetzung unter Bildung einer reaktiven Kernzusammensetzung, wobei das flüssige Harz eine flüssige Poly(glycerinsebacat)-Zusammensetzung (PGS-Zusammensetzung) ist, die PGS-Harz umfasst, und wobei die flüssige, reaktive Vernetzungszusammensetzung eine flüssige Isocyanat-Zusammensetzung ist, die mindestens ein Isocyanat umfasst,
In-Kontakt-Bringen der reaktiven Kernzusammensetzung mit einer Mantelzusammensetzung, die ein Trägerpolymer in einem Lösungsmittel umfasst, und
Nassspinnen der reaktiven Kernzusammensetzung mit der Mantelzusammensetzung unter Bildung einer Mantel-Kern-Faser, die einen Kern mit mindestens einer Endlosfaser eines Reaktionsprodukts aus dem flüssigen Harz und der flüssigen Vernetzungszusammensetzung sowie einen den Kern umgebenden Mantel umfasst, wobei die Vernetzungszusammensetzung während des Nassspinnens mit dem Harz reagiert, wobei der Mantel das Trägerpolymer umfasst, wobei die mindestens eine Endlosfaser mindestens eine Poly(glycerinsebacat)-Urethan-Endlosfaser (PGSU-Endlosfaser) ist und das Isocyanat während des Nassspinnens unter Bildung von PGSU mit dem PGS-Harz reagiert.

2. Herstellungsverfahren nach Anspruch 1, das ferner mindestens einen der folgenden Schritte umfasst:
Strecken der Mantel-Kern-Faser in mindestens einem Koagulationsbad,
Ziehen der Mantel-Kern-Faser aus dem mindestens einen Koagulationsbad,
Trocknen der Mantel-Kern-Faser zur Bildung eines Garns mit einem vorbestimmten Feuchtigkeitsgehalt und
Entfernen des Trägerpolymers von der Mantel-Kern-Faser.

3. Herstellungsverfahren nach Anspruch 1, bei dem das Trägerpolymer aus der aus Alginat, Fibrin, Collagen, Hyaluronsäure, einem Polysaccharid, einem Kohlenhydrat, Poly(N-isopropylacrylamid), Polyvinylalkohol, Polyethylenglykol, Polycaprolacton und Poly(lactid-co-glycolid) bestehenden Gruppe ausgewählt ist.

4. Herstellungsverfahren nach Anspruch 1, bei dem die reaktive Kernzusammensetzung ferner mindestens einen Katalysator umfasst.

5. Herstellungsverfahren nach Anspruch 1, das ferner Folgendes umfasst:
Strecken der Mantel-Kern-Faser in mindestens einem Koagulationsbad und
Ziehen der Mantel-Kern-Faser aus dem mindestens einen Koagulationsbad,
wobei das mindestens eine Koagulationsbad ein erstes Koagulationsbad umfasst, das eine erste Koagulationslösung enthält, die etwa 2 bis etwa 20 Gew.-% eines Salzes umfasst, das ein zweiwertiges Kation in Wasser enthält,
vorzugsweise wobei das mindestens eine Koagulationsbad ferner ein zweites Koagulationsbad umfasst, das eine zweite Koagulationslösung enthält, die etwa 20 Gew.-% des Salzes umfasst, das das zweiwertige Kation in destilliertem Wasser enthält.

6. Herstellungsverfahren nach Anspruch 1, bei dem die mindestens eine PGSU-Endlosfaser mehrere PGSU-Endlosfasern umfasst, wobei das Verfahren ferner ein Verwirbeln der mehreren PGSU-Endlosfasern zur Bildung eines Multifilament-Garnstrangs umfasst.

7. Herstellungsverfahren nach Anspruch 1, das ferner mindestens einen der folgenden Schritte umfasst:
Trocknen der Mantel-Kern-Faser zur Bildung eines Garns mit einem vorbestimmten Feuchtigkeitsgehalt und
Entfernen des Trägerpolymers von der Mantel-Kern-Faser und Aushärten der mindestens einen PGSU-Endlosfaser nach dem Entfernen des Trägerpolymers von der Mantel-Kern-Faser.

8. Herstellungsverfahren nach Anspruch 1, wobei das Verfahren mindestens eines der folgenden Merkmale umfasst:
das Trägerpolymer ist Alginat und die Mantelzusammensetzung ist eine Alginatlösung, die das Alginat in Wasser bei 1 bis 7 Gew.-% der Alginatlösung umfasst,
die flüssige PGS-Zusammensetzung umfasst ferner ein organisches Lösungsmittel,
die flüssige Isocyanat-Zusammensetzung umfasst Hexamethylendiisocyanat, und
die Kernzusammensetzung umfasst ferner mindestens einen Katalysator, der Zinn(II)-2-ethylhexanoat umfasst.

9. Herstellungsverfahren nach Anspruch 1, bei dem die Mantelzusammensetzung ein Alginat ist, wobei die Alginatlösung ein Alginat in Wasser bei 1 bis 7 Gew.-% der Alginatlösung umfasst,
wobei das In-Kontakt-Bringen ein Zuführen der reaktiven Kernzusammensetzung und der Alginatlösung durch eine Spinndüse zur Bildung der Mantel-Kern-Faser umfasst, die den Kern mit der mindestens einen Poly(glycerinsebacat)-Urethan-Endlosfaser (PGSU-Endlosfaser) und den den Kern umgebenden Mantel umfasst, wobei der Mantel das Alginat umfasst, wobei das Nassspinnen ferner Folgendes umfasst:
Strecken der Mantel-Kern-Faser in mindestens einem Koagulationsbad und
Ziehen der Mantel-Kern-Faser aus dem mindestens einen Koagulationsbad,
wobei das mindestens eine Koagulationsbad ein erstes Koagulationsbad umfasst, das eine erste Koagulationslösung enthält, die etwa 2 bis etwa 20 Gew.-% Calciumchlorid in Wasser umfasst, und
wobei das Isocyanat während des Nassspinnens unter Bildung von PGSU mit dem PGS-Harz reagiert.

10. Artikel, der mindestens eine Poly(glycerinsebacat)-Urethan-Endlosfaser (PGSU-Endlosfaser) umfasst, die PGSU umfasst.

11. Artikel nach Anspruch 10, der ferner einen Mantel mit einem Trägerpolymer um die mindestens eine PGSU-Endlosfaser umfasst, vorzugsweise wobei das Trägerpolymer Alginat ist.

12. Artikel nach Anspruch 10, der ferner mindestens ein in das PGSU eingebrachtes Arzneimittel oder mindestens ein in das PGSU eingebrachtes Porogen umfasst.

13. Artikel nach Anspruch 10, wobei der Artikel ein Garn ist oder
wobei der Artikel ein Gewebe ist oder
wobei der Artikel aus dem PGSU besteht.

14. Anlage zur Bildung von Poly(glycerinsebacat)-Urethan-Endlosfasern (PGSU-Endlosfasern), die Folgendes umfasst:
einen ersten Zuführbehälter, in dem eine flüssige Poly(glycerinsebacat)-Zusammensetzung (PGS-Zusammensetzung) enthalten ist, die PGS-Harz umfasst,
einen zweiten Zuführbehälter, in dem eine flüssige Isocyanat-Zusammensetzung enthalten ist, die mindestens ein Isocyanat umfasst,
einen dritten Zuführbehälter, in dem eine Mantellösung enthalten ist, die ein Trägerpolymer umfasst,
eine erste Pumpe, die die flüssige PGS-Zusammensetzung aus dem ersten Zuführbehälter aufnimmt und die flüssige PGS-Zusammensetzung zu einem Mischer pumpt,
eine zweite Pumpe, die die flüssige Isocyanat-Zusammensetzung aus dem zweiten Zuführbehälter aufnimmt und die flüssige Isocyanat-Zusammensetzung zu dem Mischer pumpt,
eine dritte Pumpe, die die Mantellösung aus dem dritten Zuführbehälter aufnimmt und die Mantellösung zu einer Spinndüse pumpt,
wobei der Mischer zur Bildung einer Kernzusammensetzung die flüssige PGS-Zusammensetzung mit der flüssigen Isocyanat-Zusammensetzung mischt und die Kernzusammensetzung der Spinndüse zuführt,
wobei die Spinndüse die Kernzusammensetzung und die Mantellösung aufnimmt und weiterleitet, um durch Nassspinnen eine Mantel-Kern-Faser zu bilden, die einen Mantel, der die Mantellösung umfasst, und einen Kern umfasst, der eine PGSU-Endlosfaser aus der Kernzusammensetzung umfasst, wobei das mindestens eine Isocyanat und das PGS-Harz in der Kernzusammensetzung während des Nassspinnens unter Bildung der PGSU-Endlosfaser reagieren, und
ein erstes Koagulationsbad, in dem eine erste Erstarrungslösung enthalten ist und das und die Mantel-Kern-Faser von der Spinndüse aufnimmt.

## Revendications

1. Procédé de fabrication comprenant :
le mélange d'une résine liquide avec une composition réactive de réticulation liquide pour former une composition de cœur réactive, la résine liquide étant une composition liquide de poly(sébacate de glycérol) (PGS) comprenant de la résine de PGS, et la composition réactive de réticulation liquide étant une composition d'isocyanate liquide comprenant au moins un isocyanate,
la mise en contact de la composition de cœur réactive avec une composition de gaine comprenant un polymère porteur dans un solvant, et
le filage humide de la composition de cœur réactive avec la composition de gaine pour former une fibre à gaine et cœur comprenant un cœur comprenant au moins une fibre continue d'un produit de réaction de la résine liquide et de la composition de réticulation liquide et une gaine entourant le cœur, la composition de réticulation réagissant avec la résine pendant le filage humide, la gaine comprenant le polymère porteur, ladite au moins une fibre continue étant au moins une fibre continue de poly(sébacate de glycérol)uréthane (PGSU), et l'isocyanate réagissant avec la résine de PGS pour former du PGSU pendant le filage humide.

2. Procédé de fabrication selon la revendication 1, comprenant en outre au moins l'une des étapes suivantes :
l'étirage de la fibre à gaine et cœur dans au moins un bain de coagulation,
l'extraction de la fibre à gaine et cœur dudit au moins un bain de coagulation,
le séchage de la fibre à gaine et cœur pour former un fil présentant une teneur en humidité prédéterminée, et
le retrait du polymère porteur de la fibre à gaine et cœur.

3. Procédé de fabrication selon la revendication 1, le polymère porteur étant choisi dans le groupe constitué d'alginate, de fibrine, de collagène, d'acide hyaluronique, d'un polysaccharide, d'un glucide, de poly(N-isopropylacrylamide), d'alcool polyvinylique, de polyéthylène glycol, de polycaprolactone et de poly(acide lactique-co-glycolique).

4. Procédé de fabrication selon la revendication 1, la composition de cœur réactive comprenant en outre au moins un catalyseur.

5. Procédé de fabrication selon la revendication 1, comprenant en outre :
l'étirage de la fibre à gaine et cœur dans au moins un bain de coagulation, et
l'extraction de la fibre à gaine et cœur dudit au moins un bain de coagulation,
ledit au moins un bain de coagulation comprenant un premier bain de coagulation qui contient une première solution de coagulation comprenant environ 2 % à environ 20 % en poids d'un sel contenant un cation divalent dans de l'eau,
ledit au moins un bain de coagulation comprenant de préférence en outre un deuxième bain de coagulation qui contient une deuxième solution de coagulation comprenant environ 20 % en poids du sel contenant le cation divalent dans de l'eau distillée.

6. Procédé de fabrication selon la revendication 1, ladite au moins une fibre continue de PGSU comprenant une pluralité de fibres continues de PGSU, le procédé comprenant en outre l'entrelacement de la pluralité de fibres continues de PGSU pour former un fil multifilament rond.

7. Procédé de fabrication selon la revendication 1, comprenant en outre au moins l'une des étapes suivantes :
le séchage de la fibre à gaine et cœur pour former un fil présentant une teneur en humidité prédéterminée, et
le retrait du polymère porteur de la fibre à gaine et cœur et le durcissement de ladite au moins une fibre continue de PGSU après avoir retirer le polymère porteur de la fibre à gaine et cœur.

8. Procédé de fabrication selon la revendication 1, le procédé comprenant au moins l'une des caractéristiques suivantes :
le polymère porteur est de l'alginate et la composition de gaine est une solution d'alginate comprenant l'alginate dans de l'eau à raison de 1 % à 7 % en poids de la solution d'alginate,
la composition de PGS liquide comprend en outre un solvant organique,
la composition d'isocyanate liquide comprend de l'hexaméthylène diisocyanate, et
la composition de cœur comprend en outre au moins un catalyseur comprenant du 2-éthylhexanoate d'étain (II).

9. Procédé de fabrication selon la revendication 1, la composition de gaine étant un alginate, la solution d'alginate comprenant un alginate dans de l'eau à raison de 1 % à 7 % en poids de la solution d'alginate,
la mise en contact comprenant l'alimentation de la composition de cœur réactive et de la solution d'alginate à travers une filière pour former la fibre à gaine et cœur comprenant le cœur qui comprend ladite au moins une fibre continue de poly(sébacate de glycérol)uréthane (PGSU) et la gaine qui entoure le cœur, la gaine comprenant l'alginate, le filage humide comprenant en outre :
l'étirage de la fibre à gaine et cœur dans au moins un bain de coagulation, et
le retrait de la fibre à gaine et cœur dudit au moins un bain de coagulation,
ledit au moins un bain de coagulation comprenant un premier bain de coagulation qui contient une première solution de coagulation comprenant environ 2 % à environ 20 % en poids de chlorure de calcium dans de l'eau, et
l'isocyanate réagissant avec la résine de PGS pour former du PGSU pendant le filage humide.

10. Article comprenant au moins une fibre continue de poly(sébacate de glycérol)uréthane (PGSU) comprenant du PGSU.

11. Article selon la revendication 10, comprenant en outre une gaine qui comprend un polymère porteur autour de ladite au moins une fibre continue de PGSU, le polymère porteur étant de préférence de l'alginate.

12. Article selon la revendication 10, comprenant en outre au moins un médicament chargé dans le PGSU ou au moins un agent porogène chargé dans le PGSU.

13. Article selon la revendication 10, l'article étant un fil ou
l'article étant un tissu ou
l'article étant composé du PGSU.

14. Système de formation de fibres continues de poly(sébacate de glycérol)uréthane (PGSU), comprenant :
un premier réservoir d'alimentation contenant une composition liquide de poly(sébacate de glycérol) (PGS) comprenant de la résine de PGS,
un deuxième réservoir d'alimentation contenant une composition d'isocyanate liquide comprenant au moins un isocyanate,
un troisième réservoir d'alimentation contenant une solution de gaine comprenant un polymère porteur,
une première pompe recevant la composition de PGS liquide provenant du premier réservoir d'alimentation et pompant la composition de PGS liquide vers un mélangeur,
une deuxième pompe recevant la composition d'isocyanate liquide provenant du deuxième réservoir d'alimentation et pompant la composition d'isocyanate liquide vers le mélangeur,
une troisième pompe recevant la solution de gaine provenant du troisième réservoir d'alimentation et pompant la solution de gaine vers une filière,
le mélangeur mélangeant la composition de PGS liquide avec la composition d'isocyanate liquide pour former une composition de cœur et acheminant la composition de cœur vers la filière,
la filière recevant et transférant la composition de cœur et la solution de gaine pour former une fibre à gaine et cœur comprenant une gaine qui comprend la solution de gaine et un cœur qui comprend une fibre continue de PGSU issue de la composition de cœur par filage humide, ledit au moins un isocyanate et la résine de PGS dans la composition de cœur réagissant pendant le filage humide pour former la fibre continue de PGSU, et
un premier bain de coagulation contenant une première solution de solidification et recevant la fibre à gaine et cœur provenant de la filière.
